# EUROPÄISCHE PATENTSCHRIFT

(11) **EP 1 233 211 B1**
(45) Veröffentlichungstag und Bekanntmachung des Hinweises auf die Patenterteilung: **26.01.2005**
(21) Anmeldenummer: 02001143.3
(22) Anmeldetag: 25.01.2002
(51) Int. Cl.: F16H 48/08, F16H 57/04

(54) **Ausgleichsgetriebe mit einer Schmiervorrichtung**
Differential gearing with lubricating device
Transmission différentielle avec dispositif de lubrification

(30) Priorität: 16.02.2001 DE 10107264
(43) Veröffentlichungstag der Anmeldung: 21.08.2002
(73) Patentinhaber: Volkswagen Aktiengesellschaft, 38436 Wolfsburg (DE)
(72) Erfinder: Sendzik, Klaus, 38104 Braunschweig (DE); Steinemann, Norbert, 38536 Meinersen (DE); Blumenstein, Fritz, 38448 Wolfsburg (DE)
(74) Vertreter: Schneider, Peter Christian, Dr.

(56) Entgegenhaltungen:
- EP-A- 1 079 148
- WO-A-01/65149
- DE-A- 19 730 004
- FR-A- 2 151 343
- US-A- 6 066 063
- PATENT ABSTRACTS OF JAPAN vol. 007, no. 254 (M-255), 11. November 1983 (1983-11-11) -& JP 58 137643 A (NISSAN JIDOSHA KK), 16. August 1983 (1983-08-16)
- PATENT ABSTRACTS OF JAPAN vol. 008, no. 120 (M-300), 6. Juni 1984 (1984-06-06) & JP 59 026644 A (NISSAN JIDOSHA KK), 10. Februar 1984 (1984-02-10)

## Beschreibung

Die Erfindung betrifft ein Ausgleichsgetriebe mit einer Schmiervorrichtung, insbesondere zur Schmierung der Flanschwellen in einem Ausgleichsgetriebegehäuse eines Kraftfahrzeuges, mit mindestens, zwei Ausgleichswellenrädern sowie zwei Abtriebswellenrädern, mit einem Anlaufscheibenverbund mit mindestens einer Ölleitnut, bei dem die Anlaufscheiben jeweils zwischen einem Triebrad und der Innenwand des Ausgleichsgetriebegehäuses angeordnet sind.

Ausgleichsgetriebe ermöglichen Kraftfahrzeugen das Befahren von Kurven und ungleichmäßigen Fahrbahnoberflächen unter Vermeidung von Verspannungen des Antriebsstranges. Dabei gleicht ein Ausgleichsgetriebe bei einer Verwendung als Achsdifferential unterschiedliche Drehzahlen der beiden Räder einer angetriebenen Achse und bei der Verwendung als Zentraldifferential unterschiedliche mittlere Drehzahlen von zwei angetriebenen Achsen aus.

Als häufigste Bauart kommen in Kraftfahrzeugen Kegelradausgleichsgetriebe zum Einsatz. Ein solches Ausgleichsgetriebe besteht im wesentlichen aus einem Antriebsrad, einem mit diesem fest verbundenen Ausgleichsgehäuse, zwei in dem Ausgleichsgehäuse drehbar gelagerten und mit jeweils einer Abtriebswelle verbundenen Abtriebskegelrädern, und mehreren, zumeist zwei ebenfalls in dem Ausgleichsgehäuse drehbar gelagerten und mit den Abtriebskegelrädern im Eingriff befindlichen Ausgleichskegelrädern. Es ist bekannt, auf den Abtriebswellen und auf den entsprechenden Lagerachsen der Ausgleichsräder Anlaufscheiben zwischen den Kegelrädern und einer Innenwand des Ausgleichsgehäuses anzuordnen, um ein Anlaufen der Kegelräder an das Ausgleichsgehäuse und einen damit verbundenen Verschleiß zu vermeiden.

Weiterhin ist bekannt, im Innenraum eines Ausgleichsgetriebegehäuses Vertiefungen und Schmierkanäle anzuordnen, die im Fahrbetrieb über ein Ölreservoir Schmiermittel für die Schmierung der einzelnen verschleißrelevanten Bauteile des Ausgleichsgetriebes aufnehmen und diesen zuführen. Die Schmiermittelzuführung erfolgt dabei drehzahlabhängig über Zentrifugalkraft und Schwerkraft, bis nach einer bestimmten Betriebsdauer alle Bauteile versorgt werden. Bei einer Mangelschmierung kann es zu Verschleißschäden, dem sogenannten "Fressen", insbesondere an den Flanschwellen im Ausgleichgetriebe kommen. Besonders problematisch ist eine erst mit Verzögerung einsetzende ausreichende Schmierung in der Einlaufphase von Neufahrzeugen, was häufig zu Beanstandungen führt. Zur Vermeidung von Schäden in der Einlaufphase ist es bekannt, die Flanschwellen in den getriebebauenden Werken mit Getriebeöl, bzw. Molykote zu benetzen. Das hat aber den Nachteil, dass eine ausreichende Schmierung auch in der Einlaufphase, werkabhängig ist. Zudem kann sich ggf. überschüssige Molykote nach der Montage für die spätere Ölschmierung nachteilig auswirken. Eine prozesssichere Schmierung ist damit nicht sichergestellt.

Aus der DE-OS 197 30 004 A1, die ein Ausgleichsgetriebe gemäß dem Oberbegriff des Anspruchs 1 offenbart, ist ein Anlaufscheibenverbund bekannt, bei dem die einzelnen Anlaufscheiben über Stege zu einer Baueinheit verbunden sind. Um die mechanische und thermischer Belastung der Anlaufscheiben zu mindern, weisen die einzelnen Anlaufscheiben für die Antriebswellenräder bzw. Ausgleichsräder an dem Kegelrad zugewandten Innenseiten Vertiefungen bzw. Aussparungen auf. Das Getriebeöl im Ausgleichsgehäuse gelangt hierdurch in den Kontaktbereich von Anlaufscheibenverbund und Kegelrädern und sorgt für Schmierung und Kühlung.

Nachteilig wirkt sich bei diesem Anlaufscheibenverbund aus, dass die Schmierkanäle an der Innenseite keine gezielte Schmierung der Flanschwellen ermöglichen.

Aus der DE-OS 2 219 258 ist ein Schmiersystem für ein Differential bekannt, dass eine hinreichende Zuspeisung von Schmierflüssigkeit zu den Innenteilen eines Differentialträgers ermöglichen soll. Insbesondere weisen der Differentialträger und das Differentialgehäuse eine Mehrzahl von Schöpftaschen und Kammern auf, die Öl aus dem Reservoir aufnehmen und über Bohrungen, bzw. Schmierkanäle und über verschiedene Durchlässe sowie einen Innenhohlraum, den beweglichen Teilen, insbesondere auch den Flanschwellen zuführen. Insbesondere weist das Differentialgehäuse eine Wanne auf, in der sich von einem Zahnkranz geschleudertes Öl sammelt. Durch einen Einlass und einen im Differentialgehäuse ausgebildeten Durchlass wird eine im Differentialgehäuse ausgebildete Umfangsnut mit Öl gefüllt, um die umlaufende Welle bzw. Achse mit Öl zu umgeben.

Mit dieser Lösung soll das Problem gelöst werden, das Schmiermittel unabhängig von der Drehgeschwindigkeit des Differentialträgers über Schwerkraft bzw. über Zentrifugalkräfte zuverlässig zu den Schmierstellen geleitet werden.

Nachteilig wirkt sich bei diesem nach innen offenen Schmiersystem auch hier aus, das eine gezielte Schmierung der Flanschwellen nicht erfolgt, sondern dass das Schmiermittel erst nach relativ langer Zeit im Laufe des Betriebs über die oben beschriebenen diversen Wege an die verschiedenen Bauteile gelangt.

Aus der DE-OS 195 47 980 A1 ist eine Druckscheibe bekannt, die den Verschleiß, der durch die Drehung der Zahnräder um die im Differentialgehäuse montierten Stummelwellen auftritt, vermindern soll. Die Druckscheibe weist an der Ritzel zugewandten Innenseite Schmierkanäle auf. Diese Schmierkanäle wirken mit Schmierkanälen in der Ritzel tragenden Wellen zusammen, um über Zentrifugalkräfte den Schmiermittelfluss von der Welle über die Außenseite der Ritzel zu ermöglichen.

Nachteilig wirkt sich hier wiederum aus, dass durch das offene Schmiersystem keine gezielte Schmierung der Flanschwellen erfolgt, insbesondere ist für die Abtriebswelle kein gezielter Schmierkreislauf vorgesehen.

Aufgabe der vorliegenden Erfindung ist es daher, die bekannten Schmiervorrichtungen so zu verbessern, dass in jeder Betriebssituation, insbesondere auch in der Einlaufphase, eines Ausgleichsgetriebes eines Kraftfahrzeuges, eine schnelle, wirkungsvolle und zuverlässige Schmierung der Flanschwellen des Ausgleichsgetriebes gewährleistet wird.

Die Aufgabe wird erfindungsgemäß in Verbindung mit dem Oberbegriff des Anspruchs 1 dadurch gelöst, dass die der Gehäusewand zugewandte Außenseite mindestens einer Anlaufscheibe mindestens einen erhabenen Steg aufweist, der in Wirkverbindung mit mindestens einer als Ringnut ausgebildeten Vertiefung an der Innenwand des Gehäuses einen Ölleitkanal bildet, und dass über den Ölleitkanal mindestens einer Flanschwelle ein Schmiermittel zuführbar ist.

Auf der Außenseite, d.h. der Gehäusewand des Ausgleichsgetriebes zugewandten Seite der Anlaufscheiben sind Stege als erhabene Konturen ausgebildet. Diese Stege bilden mit Ringnuten in der Gehäusewand, die ausreichend tief ausgebildet sind, eine über den Querschnitt geschlossene Schmiervorrichtung. Die Ölkanäle führen das Schmiermittel gezielt zu den Flanschwellen, d.h. zu den Abtriebswellen, bzw. den Ausgleichswellen, auch Ausgleichsbolzen genannt, des Ausgleichsgetriebes. Durch das geschlossene System entsteht im betrieb eine Pumpwirkung, die den Ölfluss beschleunigt. Auch bei niedrigen Drehzahlen wird innerhalb kürzester Zeit eine gezielte Schmiermittelzuführung erreicht. Dadurch wird eine ausreichende Schmierung auch in der Einlaufphase gewährleistet und die Einbaustelle Ausgleichsgetriebe kann insgesamt prozesssicherer gestaltet werden.

Nach einer bevorzugten Ausführungsform der Erfindung weist der erhabene Steg eine als Ölleitnut ausgebildete Vertiefung auf. Eine Ölleitnut ist geeignet, die Pumpwirkung der Schmiermittelzufuhr besonders zu verstärken. Sie ist zudem einfach als vertiefende Ausformung des Steges herzustellen und bildet mit der Ringnut einen sehr effektiven Schmierkanal.

Gemäß einer bevorzugten Ausführungsform der Erfindung sind am Ausgleichsgetriebegehäuse Schöpftaschen vorgesehen, über die die Ringnuten mit Schmiermittel füllbar sind. Die Schöpftaschen führen der Schmiervorrichtung aus dem Ausgleichsgetriebe das Getriebeöl zu, so dass die Ölleitnuten gezielt gespeist werden.

Nach einer weiteren bevorzugten Ausführungsform der Erfindung sind die Flanschwellen mit Axialnuten versehen. Es ist auch möglich, dass die Flanschwellen Abflachungen aufweisen. Dadurch kann erreicht werden, dass das über die Ölleitnuten zugeführte Öl entlang der Flanschwellen optimal verteilt wird.

Gemäß einer weiteren bevorzugten Ausführungsform der Erfindung können die Ölleitnuten verschieden groß ausgebildet. Auch können die einzelnen Schöpftaschen unterschiedliche Fassungsvolumina aufweisen. Sie können auch unterschiedlich geformt sein. Durch die unterschiedliche Ausbildung der Schmierkanäle und der Schöpftaschen kann konstruktiv eine gezielte Dosierung der Schmierung einzelner Bauteile des Ausgleichsgetriebes, insbesondere der Flanschwellen verwirklicht werden.

Nach einer weiteren bevorzugten Ausführungsform der Erfindung befindet sich am Ende einer Ölleitnut zu einer Schmierstelle hin, jeweils ein Ölvorratsraum. Dadurch wird in jeder Betriebsituation eine optimale Schmiermittelversorgung der Schmierkanäle sichergestellt.

Gemäß einer weiteren bevorzugten Ausführungsform der Erfindung ist die Schmiervorrichtung derart konstruiert, dass den Lagerstellen der Ausgleichskegelräder Schmiermittel zuführbar ist. Auch kann die Schmiervorrichtung derart ausgebildet sein, dass den axialen Abstützflächen der Ausgleichskegelräder Schmiermittel zuführbar ist. Die Lagerstellen und Abstützflächen der Ausgleichskegelräder sind sehr verschleißanfällig. Eine gezielte Ölzuführung über Schmierkanäle ist hier besonders effektiv.

Nach einer weiteren bevorzugten Ausführungsform der Erfindung wirkt die Schmiervorrichtung gleichzeitig als formschlüssige Verdrehsicherung zwischen Ausgleichsgehäuse und Anlaufscheibenverbund. Die formschlüssige Konstruktion der Schmiervorrichtung durch erhabene Stege im Eingriff mit Ringnuten in der Gehäusewand verhindert eine unerwünschte Verdrehung des Anlaufscheibenverbundes gegenüber dem Ausgleichsgetriebegehäuse.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Figuren zeigen:
- Figur 1:: Eine dreidimensionale Ansicht eines Anlaufscheibenverbundes,
- Figur 2:: eine Draufsicht des Anlaufscheibenverbundes von Fig. 1 in der Ebene A - A von Fig. 4,
- Figur 3:: eine Seitenansicht einer Ölleitnut im Schnitt der Ebene B - B von Fig. 2,
- Figur 4:: eine Seitenansicht im Schnitt des Anlaufscheibenverbundes,
- Figur 5:: eine Seitenansicht im Schnitt' des Anlaufscheibenverbundes aus einer zweiten Richtung,
- Figur 6:: eine Seitenansicht im Schnitt eines Ausgleichsgetriebes mit einem Ausgleichsgetriebegehäuse und einem Anlaufscheibenverbund nach den Figuren 1 bis 5,

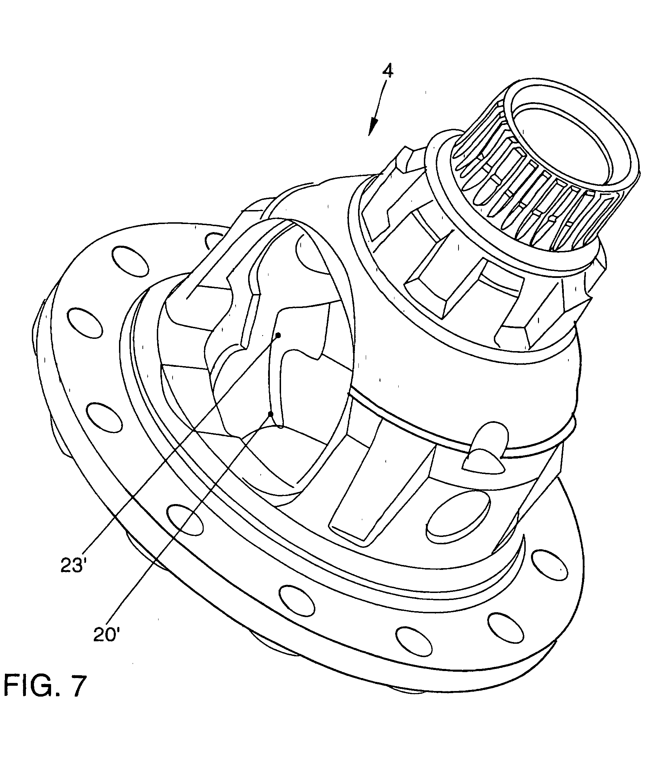

- Figur 7:: eine dreidimensionale Darstellung eines Ausgleichgetriebegehäuses nach Figur 6, und

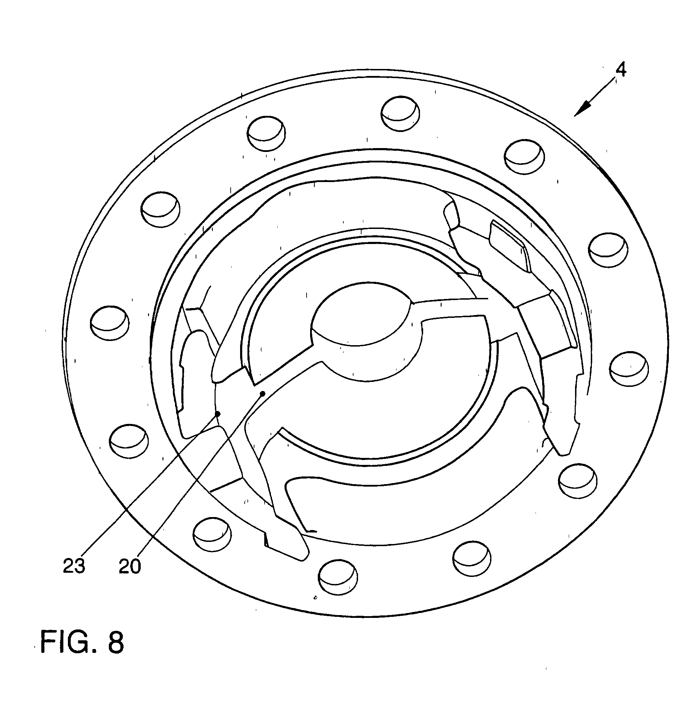

- Figur 8:: eine weitere Ansicht des Ausgleichsgetriebegehäuses aus Figur 7 aus einer anderen Betrachtungsrichtung.

Eine Vorrichtung zur Schmierung der Flanschwellen 6, 8 in einem kugelkalottenförmigen Ausgleichsgetriebegehäuse 4 eines Kraftfahrzeuges besteht im wesentlichen aus einem Anlaufscheibenverbund 12, aus je zwei Anlaufscheiben 13, 14, mit erhabenen Stegen 16, 17, die in Wirkverbindung mit'je einer Ringnut 20, 20' im Gehäuse 4 stehen, und über die die Flanschwellen 6, 8 mit Schmiermittel versorgt werden.

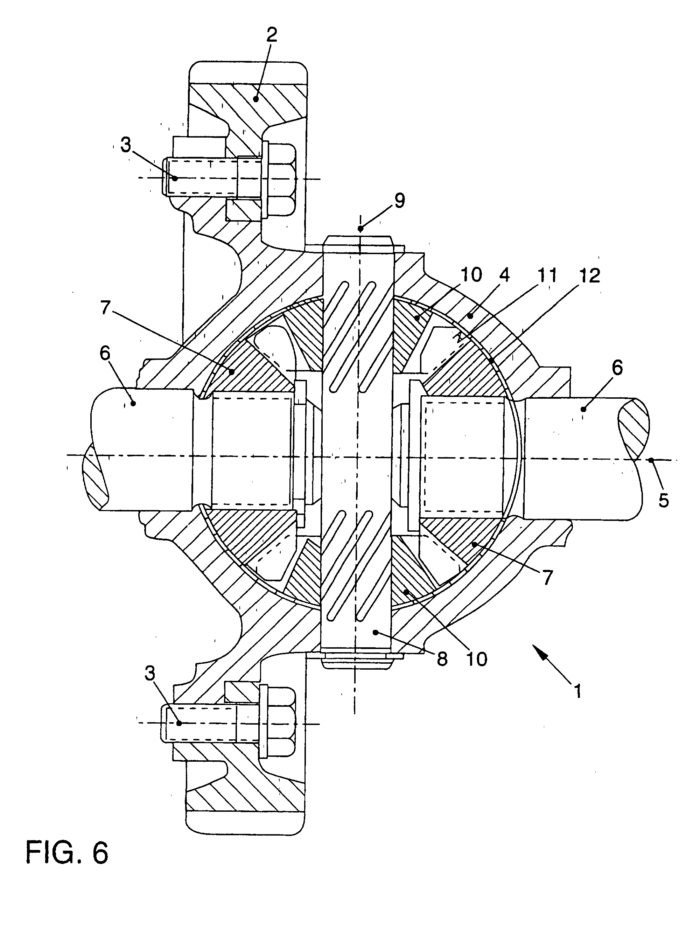

Figur 6 zeigt ein Kegelradausgleichsgetriebe 1, mit einem Ausgleichsgetriebegehäuse 4, das über die Schrauben 3 mit einem Antriebsrad 2 fest verbunden ist. In dem Ausgleichsgetriebegehäuse 4 sind zwei Abtriebswellenkegelräder 7 mit jeweils einer Abtriebswelle 6 verbunden, und um die Drehachsen 5 drehbar gelagert. Ebenso sind, mit einer gemeinsamen Ausgleichswelle 8 verbunden, zwei Ausgleichswellenkegelräder 10 um die Ausgleichswellendrehachse 9 drehbar gelagert. Zwischen der kugelförmig ausgebildeten Innenwand 11 des Ausgleichsgetriebegehäuses 4 und den Ausgleichsund Abtriebswellenkegelrädern 10, 7 ist der Anlaufscheibenverbund 12 angeordnet.

Das von einem Antriebsmotor über ein nachgeschaltetes Getriebe erzeugte Drehmoment wird über ein (nicht dargestelltes) Abtriebsritzel auf das Antriebsrad 2 übertragen. Über das Ausgleichsgetriebegehäuse 4, die Ausgleichsgetriebewelle 8, die Ausgleichskegelräder 10, sowie über die Abtriebswellenkegelräder 7 wird das wirksame Drehmoment auf die Abtriebswellen 6 und von diesen auf die Antriebsräder übertragen. Bei einer Geradeausfahrt drehen sich beide Abtriebswellen 6 mit gleicher Drehzahl, die Ausgleichskegelräder 10 drehen mit, machen aber keine Relativbewegung gegenüber dem Ausgleichsgetriebegehäuse 4. Bei einer Kurvenfahrt hingegen werden die unterschiedlichen Drehzahlen zwischen dem äußeren und dem inneren Antriebsrad dadurch ausgeglichen, dass die Abtriebswellenkegelräder 7 gegenüber dem Ausgleichsgetriebegehäuse 4 gegensinnig über die Ausgleichskegelräder 10 abrollen. der Anlaufscheibenverbund 12 sorgt dafür, dass die Kegelräder 10, 7 nicht an der Innenwand 11 des Gehäuses 4 anlaufen und der Verschleiß durch die Relativbewegungen zur Gehäusewand 11 minimiert wird. Die Schmierung der Wellen 6, 8 und Kegelräder 7, 10 erfolgt dabei durch Aufnahme von Getriebeöl, mit dem das Ausgleichsgetriebe 1 gefüllt ist.

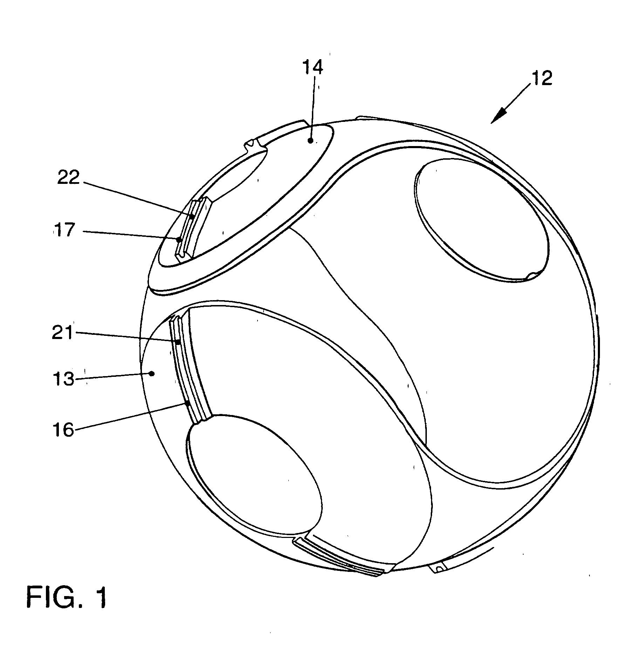

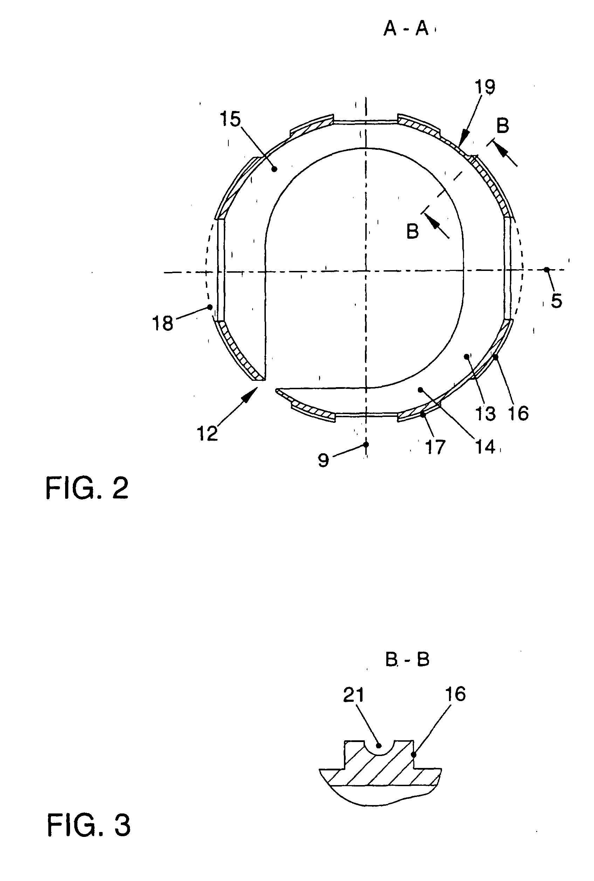

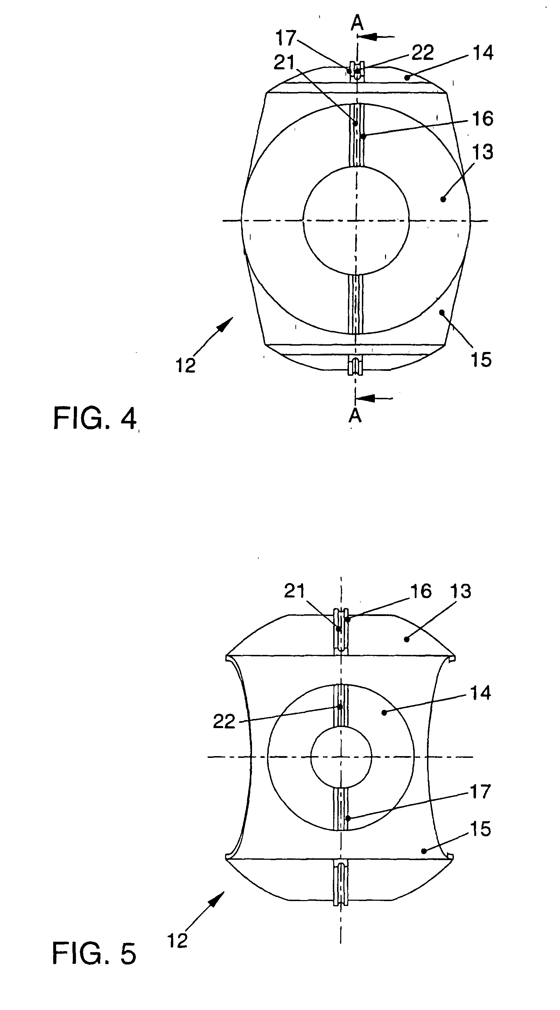

Der Anlaufscheibenverbund 12 ist in Figur 1 als Übersicht und in Details in den Figuren 2 bis 5 dargestellt. Er weist zwei Anlaufscheiben 13 für die Abtriebswellenkegelräder 7 und zwei Anlaufscheiben 14 für die Ausgleichswellenkegelräder 10 auf, wobei die Anlaufscheiben 13 entsprechend den Wellendurchmessern der Wellen 6, 8 und der Gestaltung der Kegelräder 7, 10 angepasste größere Innen- und Außendurchmesser aufweisen als die Anlaufscheiben 14. Die einzelnen Anlaufscheiben 13, 14 sind über Verbindungsstege 15 zu, einem kugelkalottenförmigen Verbund miteinander verknüpft. Die Anlaufscheiben 13, 14 sind mit jeweils zwei radial ausgerichteten Stegen 16, 17 versehen, die mittig auf einer gemeinsamen Kreislinie 18 angeordnet sind. In den Stegen 16, 17 sind die Ölleitnuten 21, 22 als gerundete Vertiefungen ausgebildet. In dem Ausgleichsgetriebegehäuse 4 sind Schöpftaschen 23, 23' mit weiterführenden umlaufenden Ringnuten 20, 20' angeordnet, die formschlüssig in die Stege des Anlaufscheibenverbundes 12 beim Zusammenbau eingreifen. Dadurch entsteht eine geschlossene Schmiervorrichtung, die eine gezielte Zuführung des über die Schöpftaschen aufgenommenen Getriebeöls zu den Flanschwellen 6, 8 erzwingt. Durch die Drehbewegung des Ausgleichsgetriebegehäuses 4 in Verbindung mit den aus den Ölleitnuten 21, 22 und Ringnuten 20 bzw. 20' erzeugten geschlossenen Schmierkanälen entwickelt sich im Fahrbetrieb eine Pumpwirkung, die in kurzer Zeit für eine ausreichende Schmiermittelversorgung der Flanschwellen 6, 8 sorgt. Gleiches gilt für die Schmierung der Kegelräder 7, 10. Bei der Einlaufphase eines Neufahrzeuges wird somit von Betriebsbeginn an eine sichere Schmierung der verschleißrelevanten Bauteile eines Ausgleichsgetriebes 1 erreicht und zuverlässig ein "Fressen" der Flanschwellen 6, 8 ausgeschlossen.

### BEZUGSZEICHENLISTE

- 1: Ausgleichsgetriebe
- 2: Antriebsachse
- 3: Schraube
- 4: Ausgleichsgetriebegehäuse
- 5: Abtriebswellendrehachse
- 6: Abtriebswelle
- 7: Abtriebswellenkegelrad
- 8: Ausgleichswelle
- 9: Ausgleichswellendrehachse
- 10: Ausgleichswellenkegelrad
- 11: Innenwand
- 12: Anlaufscheibenverbund
- 13: Anlaufscheibe
- 14: Anlaufscheibe
- 15: Verbihdungssteg
- 16: Steg
- 17: Steg
- 18: Kreislinie
- 19: Lücke
- 20, 20': Ringnut
- 21: Ölleitnut
- 22: Ölleitnut
- 23, 23': Schöpftasche

## Patentansprüche

1. Ausgleichsgetriebe (1) mit einer Schmiervorrichtung, insbesondere zur Schmierung der Flanschwellen (6, 8) in einem Ausgleichsgetriebegehäuse (4) eines Kraftfahrzeuges, mit mindestens zwei Ausgleichswellenrädern (10) sowie zwei Abtriebswellenrädern (7), mit einem Anlaufscheibenverbund (12) mit mindestens einer Ölleitnut (21, 22), bei dem die Anlaufscheiben (13, 14) jeweils zwischen einem Triebrad (7, 10) und der Innenwand (11) des Ausgleichsgetriebegehäuses (4) angeordnet sind, **dadurch gekennzeichnet, dass** die der Gehäusewand (11) zugewandte Außenseite mindestens einer Anlaufscheibe (13, 14) mindestens einen erhabenen Steg (16, 17) aufweist, der in Wirkverbindung mit mindestens einer als Ringnut (20, 20') ausgebildeten Vertiefung an der Innenwand (11) des Gehäuses (4) einen Ölleitkanal bildet, und dass über den Ölleitkanal mindestens einer Flanschwelle (6, 8) ein Schmiermittel zuführbar ist.

2. Ausgleichsgetriebe nach Anspruch 1, **dadurch gekennzeichnet, dass** der erhabene Steg (16, 17), eine als Ölleitnut (21, 22) ausgebildete Vertiefung aufweist.

3. Ausgleichsgetriebe nach Anspruch 1 oder 2, **dadurch gekennzeichnet, dass** am Ausgleichsgetriebegehäuse (4) Schöpftaschen (23, 23') vorgesehen sind, die mit den Ringnuten (20, 20') verbunden sind.

4. Ausgleichsgetriebe nach einem der Ansprüche 1 bis 3, **dadurch gekennzeichnet, dass** die Flanschwellen (6, 8) mit Axialnuten versehen sind.

5. Ausgleichsgetriebe nach einem der Ansprüche 1 bis 4, **dadurch gekennzeichnet, dass** die Flanschwellen (6, 8) mit Abflachungen versehen sind.

6. Ausgleichsgetriebe nach einem der Ansprüche 1 bis 5, **dadurch gekennzeichnet, dass** die einzelnen Ölleitnuten (21, 22) verschieden groß ausgebildet sind.

7. Ausgleichsgetriebe nach einem der Ansprüche 1 bis 6, **dadurch gekennzeichnet, dass** die einzelnen Schöpftaschen (23, 23') unterschiedliche Fassungsvolumina aufweisen.

8. Ausgleichsgetriebe nach einem der Ansprüche 1 bis 7, **dadurch gekennzeichnet, dass** die einzelnen Schöpftaschen (23, 23') verschiedene Formen aufweisen.

9. Ausgleichsgetriebe nach einem der Ansprüche 1 bis 8, **dadurch gekennzeichnet, dass** am Ende einer Ölleitnut (21, 22) zu einer Schmierstelle hin, jeweils ein Ölvorratsraum ausgebildet ist.

10. Ausgleichsgetriebe nach einem der Ansprüche 1 bis 9, **dadurch gekennzeichnet, dass** die Schmiervorrichtung derart ausgebildet ist, dass den Lagerstellen der Ausgleichswellenräder (10) Schmiermittel zuführbar ist.

11. Ausgleichsgetriebe nach einem der Ansprüche 1 bis 8, **dadurch gekennzeichnet, dass** die Schmiervorrichtung derart ausgebildet ist, dass den axialen Abstützflächen der Ausgleichswellenräder (10) Schmiermittel zuführbar ist.

12. Ausgleichsgetriebe nach einem der Ansprüche 1 bis 9, **dadurch gekennzeichnet, dass** die Schmiervorrichtung gleichzeitig als formschlüssige Verdrehsicherung zwischen Ausgleichsgetriebegehäuse (4) und Anlaufscheibenverbund (12) wirksam ist.

## Claims

1. Differential gear (1) with a lubricating device, in particular for the lubrication of the flanged shafts (6, 8) in a differential gear case (4) of a motor vehicle, with at least two balancing-shaft wheels (10) and two output-shaft wheels (7), and with a composite thrust-disk structure (12) having at least one oil guide groove (21, 22), in which the thrust disks (30, 14) are arranged in each case between driving wheel (7, 10) and the inner wall (11) of the differential gear case (4), **characterized in that** the outer face of at least one thrust disk (13, 14), the said outer face facing the case wall (11), has at least one raised web (16, 17) which, connected operatively to at least one depression, designed as an annular groove (20, 20'), on the inner wall (11) of the case (4), forms an oil guide duct, and **in that** a lubricant can be supplied to at least one flanged shaft (6, 8) via the oil guide duct.

2. Differential gear according to Claim 1, **characterized in that** the raised web (16, 17) has a depression designed as an oil guide groove (21, 22).

3. Differential gear according to Claim 1 or 2, **characterized in that** stoop pockets (23, 23') which are connected to the annular grooves (20, 20') are provided on the differential gear case (4).

4. Differential gear according to one of Claims 1 to 3, **characterized in that** the flanged shafts (6, 8) are provided with axial grooves.

5. Differential gear according to one of Claims 1 to 4, **characterized in that** the flanged shafts (6, 8) are provided with flattenings.

6. Differential gear according to one of Claims 1 to 5, **characterized in that** the individual oil guide grooves (21, 22) are designed to be of different size.

7. Differential gear according to one of Claims 1 to 6, **characterized in that** the individual stoop pockets (23, 23') have different volumetric capacities.

8. Differential gear according to one of Claims 1 to 7, **characterized in that** the individual stoop pockets (23, 23') have different shapes.

9. Differential gear according to one of Claims 1 to 8, **characterized in that** an oil storage space is formed in each case at the end of an oil guide groove (21, 22) towards a lubricating point.

10. Differential gear according to one of Claims 1 to 9, **characterized in that** the lubricating device is designed in such a way that lubricant can be supplied to bearing points of the balancing-shaft wheels (10).

11. Differential gear according to one of Claims 1 to 8, **characterized in that** the lubricating device is designed in such a way that lubricant can be supplied to the axial supporting surfaces of the balancing-shaft wheels (10).

12. Differential gear according to one of Claims 1 to 9, **characterized in that** the lubricating device is active at the same time as positive twist prevention between the differential gear case (4) and the composite thrust-disk structure (12).

## Revendications

1. Transmission différentielle (1) avec dispositif de lubrification, notamment pour lubrifier les faux arbres (6,8) dans un logement de transmission différentielle (4) d'un véhicule automobile, comportant au moins deux engrenages d'arbres de compensation (10) ainsi que deux engrenages d'arbres de sortie (7), comportant un assemblage de disques de butée (12) présentant au moins une rainure de guidage d'huile (21,22), dans lequel les disques de butée (13,14) sont disposés respectivement entre une roue motrice (7,10) et la paroi interne (11) du logement de transmission différentielle (4), **caractérisée en ce que** la face externe tournée vers la paroi de logement (11) d'au moins un disques de butée (13,14) présente au moins une nervure (16,17) en relief, qui forme un canal de guidage d'huile en interaction avec au moins une cavité réalisée comme une rainure annulaire (20,20') sur la paroi interne (11) du logement (4), et **en ce qu'**un lubrifiant peut être introduit par le canal de guidage d'huile d'au moins un faux arbre (6,8).

2. Transmission différentielle selon la revendication 1, **caractérisée en ce que** la nervure en relief (16,17) présente une cavité réalisée comme une rainure de guidage d'huile (21,22).

3. Transmission différentielle selon la revendication 1 ou 2, **caractérisée en ce que** des poches (23,23') sont prévues sur le logement de transmission différentielle (4), lesquelles sont reliées aux rainures annulaires (20,20').

4. Transmission différentielle selon une des revendications 1 à 3, **caractérisée en ce que** les faux arbres (6,8) sont pourvus de rainures axiales.

5. Transmission différentielle selon une des revendications 1 à 4, **caractérisée en ce que** les faux arbres (6,8) sont pourvus de méplats.

6. Transmission différentielle selon une des revendications 1 à 5, **caractérisée en ce que** les rainures de guidage d'huile (21,22) individuelles sont réalisées avec des tailles différentes.

7. Transmission différentielle selon une des revendications 1 à 6, **caractérisée en ce que** les poches (23,23') individuelles présentent des volumes différents.

8. Transmission différentielle selon une des revendications 1 à 7, **caractérisée en ce que** les poches (23,23') individuelles présentent des formes différentes.

9. Transmission différentielle selon une des revendications 1 à 8, **caractérisée en ce qu'**un espace de stockage d'huile est réalisé à l'extrémité d'une rainure de guidage d'huile (21,22) allant vers un emplacement de lubrification.

10. Transmission différentielle selon une des revendications 1 à 9, **caractérisée en ce que** le dispositif de lubrification est configuré de telle sorte que le lubrifiant puisse être introduit dans les zones de palier des engrenages d'arbres de compensation (10).

11. Transmission différentielle selon une des revendications 1 à 8, **caractérisée en ce que** le dispositif de lubrification est configuré de telle sorte que le lubrifiant puisse être introduit sur les surfaces d'appui axiales des engrenages d'arbres de compensation (10).

12. Transmission différentielle selon une des revendications 1 à 9, **caractérisée en ce que** le dispositif de lubrification fait en même temps office de bloc empêchant la rotation s'emboîtant entre le logement de transmission différentielle (4) et l'assemblage de disques de butée (12).
